# EUROPEAN PATENT SPECIFICATION

(11) **EP 3 705 356 B1**
(45) Date of publication and mention of the grant of the patent: **22.11.2023**
(21) Application number: 18872170.8
(22) Date of filing: 01.02.2018
(51) Int. Cl.: B60S 5/06, B60L 53/37, B60L 53/80, B60K 1/00

(54) **VEHICLE POSITION ADJUSTMENT SYSTEM, VEHICLE POSITION ADJUSTMENT METHOD AND BATTERY SWAP STATION**
FAHRZEUGPOSITIONSEINSTELLUNGSSYSTEM, VERFAHREN ZUR EINSTELLUNG DER FAHRZEUGPOSITION UND BATTERIEWECHSELSTATION
SYSTÈME D'AJUSTEMENT DE LA POSITION DU VÉHICULE, MÉTHODE D'AJUSTEMENT DE LA POSITION DU VÉHICULE ET STATION D'ÉCHANGE DE BATTERIES

(30) Priority: 01.11.2017 CN 201711055181
(43) Date of publication of application: 09.09.2020
(73) Proprietor: NIO (Anhui) Holding Co., Ltd., Hefei City, Anhui Province (CN)
(72) Inventor: LI, Nan, Anting, Jiading Shanghai (CN); TIAN, Xiaotao, Anting, Jiading Shanghai (CN); DING, Xikun, Anting, Jiading Shanghai (CN); MA, Yongyue, Anting, Jiading Shanghai (CN); BENGTSSON, Jan, Anting, Jiading Shanghai (CN)
(74) Representative: Vossius & Partner Patentanwälte Rechtsanwälte mbB
(86) International application number: PCT/CN2018/074989
(87) International publication number: WO 2019/085309

(56) References cited:
- WO-A1-2014/021148
- WO-A1-2014/204614
- CN-A- 102 267 437
- CN-A- 102 795 204
- CN-A- 106 379 290
- CN-A- 106 379 290
- CN-A- 107 264 486
- CN-U- 205 010 197
- DE-A1-102011 108 199
- US-A1- 2015 307 068

## Description

### Technical Field

The invention relates to the technical field of new energy vehicle battery swapping. In particular, the invention relates to a vehicle position adjustment system and a vehicle position adjustment method, and further relates to a vehicle battery swap station equipped with the aforementioned vehicle position adjustment system.

### Background Art

In order to adapt to environmental protection and energy crisis, new energy vehicles are becoming more and more popular. A very important development trend of existing new energy vehicles is the new energy vehicles with swappable batteries, which can greatly shorten the energy supply time compared with plug-in new energy vehicles.

Manual battery swapping is not suitable for industrial applications in the battery swap station due to its low efficiency. Therefore, in order to realize fast and efficient automated battery swapping, it is necessary to provide a vehicle position adjustment system in the new energy vehicle battery swap station to move the new energy vehicle to a target position suitable for battery swapping before using battery swap equipment to perform automated battery swapping.

Chinese Patent Application Publication No. CN 103692447 A discloses a battery positioning method for an electric vehicle based on a top-view camera and a side-view camera. CN 107 264 486 A discloses a visual positioning method and system. Position information of a vehicle with a to-be-replaced battery is obtained and a battery replacing robot is provided at the projection position of a target battery replacing position. Once the battery replacing robot has arrived at the projection position, the battery replacing robot replaces an energy storage unit for the vehicle with the to-be-replaced battery. Due to the first position information of the vehicle, the battery replacing robot can arrive at the projection position of the target battery replacing position for multiple times without the need of visual positioning. CN 106 379 290 A discloses an electric automobile battery replacement system comprising an electricity storage bin, a rail, an automobile locating platform, a connection trolley and a data acquisition and control device. The automobile locating platform and the connection trolley are controlled to realize battery replacement according to data of a data acquisition battery.

### Summary of the Invention

It is an object of one aspect of the invention to provide an improved vehicle position adjustment system.

It is an object of another aspect of the invention to provide an improved vehicle position adjustment method.

An object of a further aspect of the invention is to provide an improved battery swap station.

In order to achieve the aforementioned objects, a first aspect of the invention provides, as defined by claim 1, a vehicle position adjustment system for a vehicle battery swap station, wherein the vehicle position adjustment system comprises:
image acquisition devices, which are configured to face at least two feature holes in a chassis of a vehicle whose position is to be adjusted, and are adapted to acquire images of the at least two feature holes;
vehicle support and adjustment devices, which support the vehicle at a battery swap platform of the vehicle battery swap station, and are adapted to adjust the position of the vehicle; and
a control device, which is communicatively connected to the image acquisition devices and the vehicle support and adjustment devices, stores theoretical positions of the feature holes in the chassis of the vehicle, and is adapted to compare positions of the feature holes in the images with the theoretical positions and control the vehicle support and adjustment devices according to the difference therebetween so as to adjust the position of the vehicle.

Optionally, in the vehicle position adjustment system as described above, the image acquisition devices include two photographing cameras, each for photographing one of the at least two feature holes.

Optionally, in the vehicle position adjustment system as described above, the vehicle support and adjustment devices include a first group of lifting arms for lifting a front end of the vehicle and a second group of lifting arms for lifting a rear end of the vehicle, one group of the first group of lifting arms and the second group of lifting arms is a group of floatable arms and the other group is a group of motor actuated arms, and
the vehicle position adjustment system further comprises a transfer trolley for carrying a vehicle battery, and the image acquisition devices are disposed on the transfer trolley.

Optionally, in the vehicle position adjustment system as described above, the first group of lifting arms and the second group of lifting arms respectively comprise lifting arms located on two sides of the battery swap platform.

Optionally, in the vehicle position adjustment system as described above, the image acquisition devices are located on one and the same side of the transfer trolley.

Optionally, in the vehicle position adjustment system as described above, the image acquisition devices are disposed diagonally on the transfer trolley.

Optionally, in the vehicle position adjustment system as described above, the vehicle position adjustment system has a rail for the transfer trolley.

Optionally, in the vehicle position adjustment system as described above, the rail extends between the battery swap platform and a battery storage.

In order to achieve the aforementioned objects, a second aspect of the invention provides, as defined by claim 9, a vehicle position adjustment method using a vehicle position adjustment system according to the third to eighth items of the foregoing first aspect, wherein the method comprises the following steps:
step A: raising the vehicle to a predetermined height by means of the first group of lifting arms and the second group of lifting arms;
step B: moving the transfer trolley to a predetermined position on the battery swap platform;
step C: acquiring images of the at least two feature holes by means of the image acquisition devices;
step D: adjusting, by means of the motor actuated arms, the position of the vehicle according to the difference between the positions of the feature holes in the images and the theoretical positions;
step E: determining the position of the vehicle, and ending if the required predetermined position is reached, otherwise, returning to step C.

In order to achieve the foregoing objects, a third aspect of the invention provides a battery swap station, wherein the battery swap station is equipped with a vehicle position adjustment system according to any item of the foregoing first aspect.

### Brief Description of the Drawings

The disclosure of the invention will be more apparent with reference to the accompanying drawings. It should be appreciated that these accompanying drawings are merely used for the purpose of illustration, and are not intended to limit the scope of protection of the invention. In the figures:
Fig. 1 is a schematic diagram of a vehicle position adjustment system according to an embodiment of the invention;
Fig. 2 is a perspective view of lifting arms in the vehicle position adjustment system in Fig. 1; and
Fig. 3 is a top view of the lifting arms in Fig. 2, schematically depicting the vehicle whose position needs to be adjusted.

### Detailed Description of Embodiments

Specific embodiments of the invention are described below in detail with reference to the accompanying drawings. In the accompanying drawings, the same reference numerals represent the same or corresponding technical features.

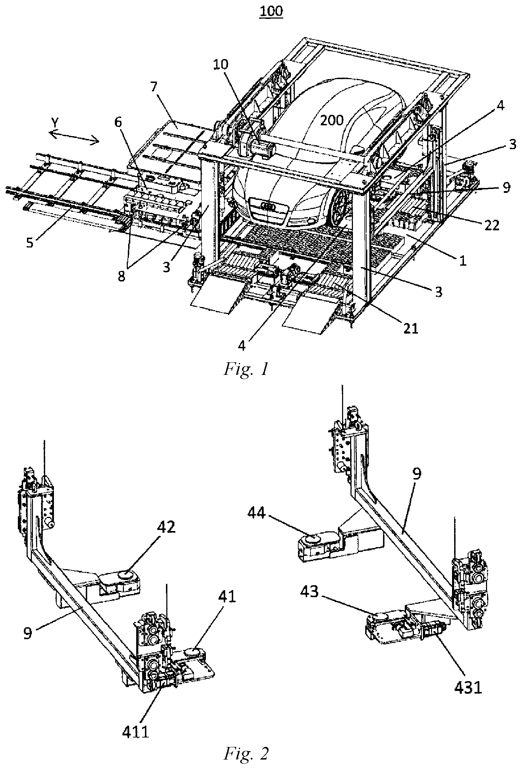

Fig. 1 is a schematic diagram of a vehicle position adjustment system according to an embodiment of the invention.

As shown in Fig. 1, the vehicle position adjustment system 100 of this embodiment is a vehicle position adjustment system applied to a vehicle battery swap station. In the vehicle position adjustment system shown in the figure, a battery swap platform 1 is shown. A new energy vehicle 200 can be parked on the battery swap platform 1 for swapping of a traction battery.

Vehicle support and adjustment devices are arranged at the battery swap platform 1, such as groups of rollers 21 and 22 on the platform. By parking the wheels of the vehicle on the corresponding rollers and driving the rollers to rotate, the position of the vehicle 200 on the battery swap platform 1 can be adjusted. The vehicle support and adjustment devices may also be lifting arms 4 on columns 3, which can raise the vehicle 200 to a certain height before adjusting the position of the vehicle. It can be seen that the vehicle support and adjustment devices are adapted to support the vehicle at the battery swap platform and can adjust the position of the vehicle.

It can also be seen from Fig. 1 that on one side of the battery swap platform, a rail 5 is provided for allowing a transfer trolley 6 carrying batteries to transfer the batteries between the battery swap platform 1 and a battery storage (not shown). A traction battery 7 is illustrated on the transfer trolley 6. The battery storage is used to store batteries and can temporarily charge the batteries.

According to the embodiment of Fig. 1, the vehicle position adjustment system 100 further comprises image acquisition devices 8, wherein the image acquisition devices 8 include two photographing cameras located on one and the same side of the transfer trolley. The two photographing cameras can be used to photograph at least two feature holes in the chassis of the vehicle. By comparing the positions of the feature holes obtained by photographing with the pre-stored theoretical positions of the feature holes, the vehicle can be adjusted to a desired position according to the difference therebetween.

Generally speaking, due to technical requirements, there are four feature holes in the chassis of a vehicle, i.e., two feature holes on the left and right at the front end of the vehicle and two feature holes on the left and right at the rear end of the vehicle, respectively, which are used to determine the relative mounting positions of components of each vehicle in a welding workshop. It will be appreciated that the solution of the present application is equally applicable to vehicles having other different numbers of feature holes in the chassis, which numbers are not less than two.

As previously mentioned, the image acquisition devices 1 can be configured to face at least two feature holes in a chassis of a vehicle whose position is to be adjusted, and are adapted to acquire images of the at least two feature holes. The present application does not particularly limit the specific number, specific location, etc. of the image acquisition devices. However, as mentioned above, in the illustrated embodiment, the image acquisition devices 8 may include two photographing cameras, which are located on one and the same side of the trolley 6 carrying the traction battery and are used for photographing one feature hole on this side of the vehicle.

The arrangement of the image acquisition devices 8 in this illustrated embodiment is merely exemplary, and other settings may be made in different embodiments.

For example, in an optional embodiment, the image acquisition device may comprise only one photographing camera, and the photographing camera may simultaneously photograph at least two feature holes. In another optional embodiment, the image acquisition devices may include two photographing cameras, which may respectively be used for photographing images of two adjacent feature holes on one and the same side, and may otherwise respectively be used for photographing two diagonal feature holes. It can be understood that in this case, the two photographing cameras also need to be accordingly arranged on one and the same side or diagonally. In still another optional embodiment, the image acquisition devices may comprise three photographing cameras for respectively photographing three feature holes. In addition, in other optional embodiments, a greater number of photographing cameras may be provided, or the image acquisition device is not limited to the specific form of a photographing camera.

Based on the positions of the feature holes in the captured images, the position of the vehicle can be adjusted by comparing same with the stored theoretical positions of the feature holes. In the illustrated embodiment, since the image acquisition devices 8 are mounted directly on the transfer trolley 6, the position of the transfer trolley 6 can also be adjusted while the position of the vehicle is adjusted, so that the vehicle and the battery are quickly and accurately aligned, facilitating battery detachment and installation.

Meanwhile, it should be pointed out that, in some optional embodiments, the image acquisition device is not limited to being disposed on the transfer trolley 6 but may be disposed on the battery swap platform 1 at an appropriate position lower than the vehicle chassis. For example, in an optional embodiment, the image acquisition device may be provided directly on the battery swap platform or be attached to other components at the battery swap platform.

In the illustrated embodiment, a transfer trolley for carrying the traction battery of the vehicle is provided. In this case, as described above, the image acquisition devices can be arranged on one and the same side of the transfer trolley; and when photographing diagonal feature holes in a chassis of the vehicle, the image acquisition devices can also be arranged diagonally on the transfer trolley. The arrangement of the image acquisition devices on the transfer trolley is not limited to one side or diagonal positions of the transfer trolley. Instead, the image acquisition devices are arranged at positions where the positions of the at least two feature holes can be obtained.

In order to conveniently control the traction battery transfer, the illustrated vehicle position adjustment system is provided with a rail 5 for a transfer trolley. The rail 5 may extend between the battery swap platform 1 and a battery storage (not shown), and is adapted to guide the transfer trolley to move traction batteries between the battery swap platform 1 and the battery storage, allowing a used battery to be moved from the battery swap platform to the battery storage and a fresh battery to be moved from the battery storage to the battery swap platform.

In the state shown in Fig. 1, the vehicle support and adjustment device comprises a first group of lifting arms 41 and 43 for lifting the front end of the vehicle and a second group of lifting arms 42 and 44 for lifting the rear end of the vehicle. Fig. 2 is a perspective view of the lifting arms 41, 42, 43, 44 in the vehicle position adjustment system of Fig. 1, showing the lifting arms of each group more clearly.

In order to control the lifting of the lifting arms in a balanced manner, the lifting arms are respectively mounted on a support 9 and adapted to lift the vehicle 200 from two sides. Under the actuation of an electric motor 10 at the top of the column 3, the support frame 9 can move up and down along the column 3 at the battery swap platform 1, so as to drive each lifting arm to lift or lower the vehicle 200. In the illustrated embodiment, a total of four columns 3 are shown. The two ends of each support 9 can both move along two columns. In other embodiments, other slide rails besides the columns may also be used, and description will not be expanded herein.

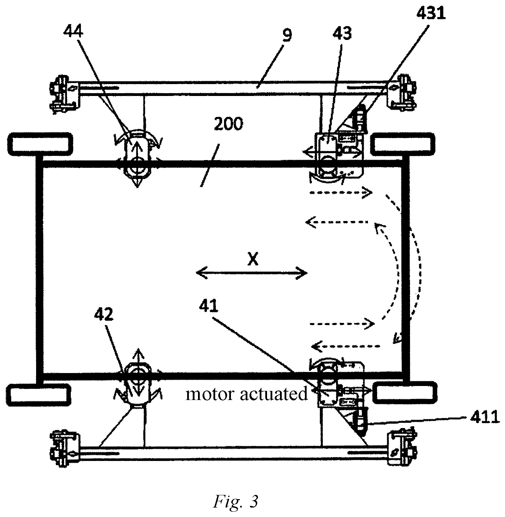

In the embodiment of Fig. 2, the first group of lifting arms 41 and 43 are motor actuated arms that are movable under the action of the servo motors 411 and 431 respectively in the fore-and-aft direction of the vehicle in Fig. 1 (or in the X-direction in Fig. 3); and The second group of lifting arms 42 and 44 are floatable arms, which do not have their own servo motors but are capable of free floating adjustment in the fore-and-aft, left-and-right and swinging directions. In an alternative embodiment, the first group of lifting arms 41 and 43 may be arranged as floatable arms and the second group of lifting arms 42 and 44 may be arranged as motor actuated arms. The first group of lifting arms comprises lifting arms 41 and 43 on different sides of the battery swap platform, and the second group of lifting arms comprises lifting arms 42 and 44 on different sides of the battery swap platform.

Fig. 3 is a top view of the lifting arms in Fig. 2, schematically showing the vehicle 200 whose position needs to be adjusted. In the illustrated embodiment, after the vehicle 200 is raised to a predetermined height, the servo motors 411 and 431 at the lifting arms 41 and 43 can be controlled so as to adjust the position of the vehicle 200.

The servo motors 411 and 431 can control the lifting arms 41 and 43 to move back and forth along the body of the vehicle 200. Since the lifting arms 42 and 44 are free to float all around (including, for example, fore-and-aft, left-and-right, and swinging directions), the forward, backward or swing movement of the vehicle 200 can be achieved by controlling the synchronous or asynchronous movement of the lifting arms 41 and 43 in the same or different directions.

For example, when the servo motors control the lifting arms 41 and 43 to move forward at the same time, the vehicle moves forward; when the servo motors control the lifting arms 41 and 43 to move backward at the same time, the vehicle moves backward; when the servo motors control the lifting arm 41 to move forward and the lifting arm 43 to move backward, the front end of the vehicle is deflected toward the lifting arm 43; and when the servo motors control the lifting arm 41 to move backward and the lifting arm 43 to move forward, the front end of the vehicle is deflected toward the lifting arm 41.

It should be noted here that the vehicle position adjustment system according to the embodiment of the invention may further have a control device, although not shown in the drawing. Optionally, the control device is adapted to store the theoretical positions of the feature holes and to compare the positions of the feature holes in the image with the theoretical positions, and to control the adjustment of the position of the vehicle by the vehicle support and adjustment devices according to the difference therebetween. Further, the control device may further control the Y-direction (see Fig. 1) displacement of the transfer trolley 6 as needed to achieve alignment of the battery on the transfer trolley with the vehicle chassis.

The control device may be communicatively connected to the image acquisition device and the vehicle support and adjustment device. It is conceivable that the communicative connection may be a wired connection or a wireless connection. The control device can also be communicatively connected to a drive device of the transfer trolley in order to control the displacement of the transfer trolley and the alignment of the trolley with the chassis of the vehicle.

The following describes a vehicle position adjustment method using a vehicle position adjustment system as shown in the figure, which may comprise the following steps.

When a vehicle with a battery to be swapped is driven to an appropriate position on a battery swap platform in the battery swap station, the vehicle position adjustment method starts.

In step A, the vehicle is raised to a predetermined height by means of the first group of lifting arms and the second group of lifting arms. In this step, the vehicle is raised to a predetermined height suitable for photographing the feature holes in the chassis of the vehicle for position comparison. This height should be enough to allow the transfer trolley to move to an area under the chassis of the vehicle. For example, when the image acquisition device is located on the transfer trolley, the transfer trolley needs to be moved to an area under the vehicle chassis to photograph the feature holes in the vehicle chassis from below. Even if the image acquisition device is not on the transfer trolley, the transfer trolley is also required to enter the area under the vehicle chassis for battery swapping operation. The method proceeds to Step B after the vehicle is raised to the proper predetermined height.

In step B, the transfer trolley is moved to a predetermined position on the battery swap platform. As the vehicle chassis has ascended to a sufficient height, the transfer trolley can be moved to the area under the vehicle. In the case that the image acquisition devices are disposed on the transfer trolley, the predetermined position of the transfer trolley on the battery swap platform should satisfy the requirement that the image acquisition devices can obtain the images of the at least two feature holes so as to facilitate the comparison with the theoretical positions of the feature holes in the subsequent steps. That is, the image acquisition devices at the predetermined position can photograph the at least two feature holes in the chassis of the vehicle. Then, the method proceeds to step C.

In step C, images of the at least two feature holes are acquired by means of the image acquisition devices. For example, pictures can be taken with a photographing camera, etc. As can be seen from the foregoing text of the application, the number of the feature holes captured may be two, three or more, and the feature holes may be adjacent feature holes on one and the same side, or may be diagonally arranged feature holes. After completing the image acquisition, the method proceeds to step D.

In step D, the position of the transfer trolley, and optionally also the position of the vehicle, is adjusted by means of the motor actuated arms according to the difference between the positions of the feature holes in the images and the theoretical positions. It can be seen here that the position of the vehicle, and optionally also the position of the transfer trolley, can be adjusted flexibly. After the adjustment, the method proceeds to step E.

In step E, the position of the vehicle is determined, and the method ends if the required predetermined position is reached, otherwise, the method returns to step C. It can be seen that this vehicle position adjustment method is capable of automatic adjustment until the desired position is reached.

It can be seen from the above that according to the vehicle position adjustment system and the vehicle position adjustment method of the illustrated embodiments of the invention, the image acquisition devices are fixed on the transfer trolley with the theoretical position of the transfer trolley as the system coordinate, and the image acquisition devices acquire the position of the feature holes at the bottom of the vehicle body and determine the deviation thereof from the theoretical value, so as to drive the lifting arms by the servo motors to adjust the fore-and-aft direction and the horizontal yaw direction of the vehicle body and then to adjust the lateral deviation along the vehicle body by the transfer trolley. The advantages include the following aspects: (1) the positioning accuracy is high, the X-direction (fore-and-aft direction of the vehicle) deflection and the horizontal deflection of the vehicle can be adjusted, and adjustment in the Y-direction can be achieved through a rail servo walking motor of the transfer trolley; (2) the transfer trolley and the vehicle body can be aligned completely; and (3) the adjustment is not affected by vehicle lifting, as the vehicle position adjustment is carried out after the vehicle is lifted.

In another aspect of the invention, further provided is a battery swap station. In such a battery swap station, a vehicle position adjustment system as described in any one of the preceding embodiments may be provided. It can be understood that such a battery swap station will have the advantages corresponding to those of the vehicle position adjustment system and can significantly improve the battery swapping efficiency.

The technical scope of the invention is not merely limited to the above description. Those skilled in the art can make various changes and modifications to the above embodiments without departing from the scope of the claims.

## Claims

1. A vehicle position adjustment system (100) for a vehicle battery swap station, comprising:
image acquisition devices (8), which are configured to face at least two feature holes in a chassis of a vehicle (200) whose position is to be adjusted, and are adapted to acquire images of the at least two feature holes; **characterized by** comprising:
vehicle support and adjustment devices, which support the vehicle (200) at a battery swap platform (1) of the vehicle battery swap station, and are adapted to adjust the position of the vehicle (200); and
a control device, which is communicatively connected to the image acquisition devices (8) and the vehicle support and adjustment devices, stores theoretical positions of the feature holes in the chassis of the vehicle (200), and is adapted to compare positions of the feature holes in the images with the theoretical positions and control the vehicle support and adjustment devices according to the difference therebetween so as to adjust the position of the vehicle (200).

2. The vehicle position adjustment system (100) according to claim 1, **characterized in that** the image acquisition devices (8) include two photographing cameras, each for photographing one of the at least two feature holes.

3. The vehicle position adjustment system (100) according to claim 1 or 2, **characterized in that** the vehicle support and adjustment devices include a first group of lifting arms (41, 43) for lifting a front end of the vehicle (200) and a second group of lifting arms (42, 44) for lifting a rear end of the vehicle (200), one group of the first group of lifting arms (41, 43) and the second group of lifting arms (42, 44) is a group of floatable arms and the other group is a group of motor actuated arms, and
the vehicle position adjustment system (100) further comprises a transfer trolley (6) for carrying a vehicle battery, and the image acquisition devices (8) are disposed on the transfer trolley (6).

4. The vehicle position adjustment system (100) according to claim 3, **characterized in that** the first group of lifting arms (41, 43) and the second group of lifting arms (42, 44) respectively comprise lifting arms located on two sides of the battery swap platform (1).

5. The vehicle position adjustment system (100) according to claim 3, **characterized in that** the image acquisition devices (8) are located on one and the same side of the transfer trolley (6).

6. The vehicle position adjustment system (100) according to claim 3, **characterized in that** the image acquisition devices (8) are disposed diagonally on the transfer trolley (6).

7. The vehicle position adjustment system (100) according to claim 3, **characterized in that** the vehicle position adjustment system (100) has a rail (5) for the transfer trolley (6).

8. The vehicle position adjustment system (100) according to claim 7, **characterized in that** the rail (5) extends between the battery swap platform (1) and a battery storage.

9. A vehicle position adjustment method using a vehicle position adjustment system (100) according to any one of claims 3 to 8, **characterized by** comprising the steps of:
step A: raising the vehicle (200) to a predetermined height by means of the first group of lifting arms (41, 43) and the second group of lifting arms (42, 44);
step B: moving the transfer trolley (6) to a predetermined position on the battery swap platform (1);
step C: acquiring images of the at least two feature holes by means of the image acquisition devices (8);
step D: adjusting, by means of the motor actuated arms, the position of the vehicle (200) according to the difference between the positions of the feature holes in the images and the theoretical positions;
step E: determining the position of the vehicle (200), and ending if the required predetermined position is reached, otherwise, returning to step C.

10. A battery swap station, **characterized by** comprising a vehicle position adjustment system (100) according to any one of the preceding claims 1 to 8.

## Patentansprüche

1. Fahrzeugpositionseinstellungssystem (100) für eine Fahrzeugbatteriewechselstation, aufweisend:
Bildaufnahmevorrichtungen (8), die dazu eingerichtet sind, mindestens zwei Merkmalslöchern in einem Fahrgestell eines Fahrzeugs (200), dessen Position eingestellt werden soll, zugewandt zu sein, und die dazu eingerichtet sind, Bilder der mindestens zwei Merkmalslöcher zu erlangen; **dadurch gekennzeichnet, dass** sie aufweist:
Fahrzeugstütz- und -einstellungsvorrichtungen, die das Fahrzeug (200) an einer Batteriewechselplattform (1) der Fahrzeugbatteriewechselstation stützen und dazu eingerichtet sind, die Position des Fahrzeugs (200) einzustellen; und
eine Steuerungsvorrichtung, die kommunikativ mit den Bilderaufnahmevorrichtungen (8) und den Fahrzeugstütz- und -einstellungsvorrichtungen verbunden ist, theoretische Positionen der Merkmalslöcher im Fahrgestell des Fahrzeugs (200) speichert und dazu eingerichtet ist, Positionen der Merkmalslöcher in den Bildern mit den theoretischen Positionen zu vergleichen und die Fahrzeugstütz- und -einstellungsvorrichtungen gemäß der Differenz zwischen derselben zu steuern, um die Position des Fahrzeugs (200) einzustellen.

2. Fahrzeugpositionseinstellungssystem (100) gemäß Anspruch 1, **dadurch gekennzeichnet, dass** die Bildaufnahmevorrichtungen (8) zwei Fotokameras aufweisen, um jeweils eines der mindestens zwei Merkmalslöcher zu fotografieren.

3. Fahrzeugpositionseinstellungssystem (100) gemäß Anspruch 1 oder 2, **dadurch gekennzeichnet, dass** die Fahrzeugstütz- und -einstellungsvorrichtungen eine erste Gruppe von Hebearmen (41, 43) zum Heben eines vorderen Endes des Fahrzeugs (200) und eine zweite Gruppe von Hebearmen (42, 44) zum Heben eines hinteren Endes des Fahrzeugs (200) aufweisen, wobei eine Gruppe der ersten Gruppe von Hebearmen (41, 43) und der zweiten Gruppe von Hebearmen (42, 44) eine Gruppe von schwimmenden Armen ist und die andere Gruppe eine Gruppe von motorbetätigten Armen ist, und
das Fahrzeugpositionseinstellungssystem (100) ferner einen Transferwagen (6) zum Tragen einer Fahrzeugbatterie aufweist, und die Bildaufnahmevorrichtungen (8) auf dem Transferwagen (6) angeordnet sind.

4. Fahrzeugpositionseinstellungssystem (100) gemäß Anspruch 3, **dadurch gekennzeichnet, dass** die erste Gruppe von Hebearmen (41, 43) und die zweite Gruppe von Hebearmen (42, 44) jeweils Hebearme aufweisen, die auf zwei Seiten der Batteriewechselplattform (1) angeordnet sind.

5. Fahrzeugpositionseinstellungssystem (100) gemäß Anspruch 3, **dadurch gekennzeichnet, dass** die Bildaufnahmevorrichtungen (8) auf ein und derselben Seite des Transferwagens (6) angeordnet sind.

6. Fahrzeugpositionseinstellungssystem (100) gemäß Anspruch 3, **dadurch gekennzeichnet, dass** die Bildaufnahmevorrichtungen (8) diagonal auf dem Transferwagen (6) angeordnet sind.

7. Fahrzeugpositionseinstellungssystem (100) gemäß Anspruch 3, **dadurch gekennzeichnet, dass** das Fahrzeugpositionseinstellungssystem (100) eine Schiene (5) für den Transferwagen (6) aufweist.

8. Fahrzeugpositionseinstellungssystem (100) gemäß Anspruch 7, **dadurch gekennzeichnet, dass** sich die Schiene (5) zwischen der Batteriewechselplattform (1) und einem Batterielagerplatz erstreckt.

9. Verfahren zur Einstellung der Fahrzeugposition unter Verwendung eines Fahrzeugpositionseinstellungssystems (100) gemäß einem der Ansprüche 3 bis 8, **dadurch gekennzeichnet, dass** es die folgenden Schritte umfasst:
Schritt A: Heben des Fahrzeugs (200) auf eine vorbestimmte Höhe mittels der ersten Gruppe von Hebearmen (41, 43) und der zweiten Gruppe von Hebearmen (42, 44);
Schritt B: Bewegen des Transferwagens (6) in eine vorbestimmte Position auf der Batteriewechselplattform (1) ;
Schritt C: Erlangen von Bildern der mindestens zwei Merkmalslöcher mittels der Bildaufnahmevorrichtungen (8);
Schritt D: Einstellen der Position des Fahrzeugs (200) mittels der motorbetätigten Arme gemäß der Differenz zwischen den Positionen der Merkmalslöcher in den Bildern und den theoretischen Positionen;
Schritt E: Bestimmen der Position des Fahrzeugs (200) und Beenden, wenn die erforderliche vorbestimmte Position erreicht ist, andernfalls Rückkehren zu Schritt C.

10. Batteriewechselstation, **dadurch gekennzeichnet, dass** sie ein Fahrzeugpositionseinstellungssystem (100) gemäß einem der vorhergehenden Ansprüche 1 bis 8 umfasst.

## Revendications

1. Système de réglage de position de véhicule (100) pour une station de remplacement de batterie de véhicule, comprenant :
des dispositifs d'acquisition d'images (8), qui sont configurés pour faire face à au moins deux trous caractéristiques dans un châssis d'un véhicule (200) dont la position doit être réglée, et qui sont conçus pour acquérir des images des au moins deux trous caractéristiques ; **caractérisé en ce qu'**il comprend :
des dispositifs de support et de réglage de véhicule, qui supportent le véhicule (200) au niveau d'une plate-forme de remplacement de batterie (1) de la station de remplacement de batterie de véhicule, et qui sont conçus pour régler la position du véhicule (200) ; et
un dispositif de commande, qui est connecté en communication aux dispositifs d'acquisition d'images (8) et aux dispositifs de support et de réglage de véhicule, mémorise les positions théoriques des trous caractéristiques dans le châssis du véhicule (200), et est conçu pour comparer des positions des trous caractéristiques dans les images avec les positions théoriques et commander les dispositifs de support et de réglage de véhicule en fonction de la différence entre celles-ci de manière à régler la position du véhicule (200) .

2. Système de réglage de position de véhicule (100) selon la revendication 1, **caractérisé en ce que** les dispositifs d'acquisition d'images (8) comportent deux appareils photographiques, chacun pour photographier un des au moins deux trous caractéristiques.

3. Système de réglage de position de véhicule (100) selon la revendication 1 ou 2, **caractérisé en ce que** les dispositifs de support et de réglage de véhicule comprennent un premier groupe de bras de levage (41, 43) pour lever une extrémité avant du véhicule (200) et un second groupe de bras de levage (42, 44) pour lever une extrémité arrière du véhicule (200), un groupe du premier groupe de bras de levage (41, 43) et du second groupe de bras de levage (42, 44) est un groupe de bras flottants et l'autre groupe est un groupe de bras actionnés par un moteur, et
le système de réglage de position de véhicule (100) comprend en outre un chariot de transfert (6) pour transporter une batterie de véhicule, et les dispositifs d'acquisition d'images (8) sont disposés sur le chariot de transfert (6).

4. Système de réglage de position de véhicule (100) selon la revendication 3, **caractérisé en ce que** le premier groupe de bras de levage (41, 43) et le second groupe de bras de levage (42, 44) comprennent respectivement des bras de levage situés sur deux côtés de la plate-forme de remplacement de batterie (1).

5. Système de réglage de position de véhicule (100) selon la revendication 3, **caractérisé en ce que** les dispositifs d'acquisition d'images (8) sont situés sur un seul et même côté du chariot de transfert (6).

6. Système de réglage de position de véhicule (100) selon la revendication 3, **caractérisé en ce que** les dispositifs d'acquisition d'images (8) sont disposés en diagonale sur le chariot de transfert (6).

7. Système de réglage de position de véhicule (100) selon la revendication 3, **caractérisé en ce que** le système de réglage de position de véhicule (100) comporte un rail (5) pour le chariot de transfert (6).

8. Système de réglage de position de véhicule (100) selon la revendication 7, **caractérisé en ce que** le rail (5) s'étend entre la plate-forme de remplacement de batterie (1) et un rangement de batterie.

9. Procédé de réglage de position de véhicule utilisant un système de réglage de position de véhicule (100) selon l'une quelconque des revendications 3 à 8, **caractérisé en ce qu'**il comprend les étapes suivantes :
étape A : élever le véhicule (200) à une hauteur prédéterminée au moyen du premier groupe de bras de levage (41, 43) et du second groupe de bras de levage (42, 44) ;
étape B : déplacer le chariot de transfert (6) jusqu'à une position prédéterminée sur la plate-forme de remplacement de batterie (1) ;
étape C : acquérir des images des au moins deux trous caractéristiques au moyen des dispositifs d'acquisition d'images (8) ;
étape D : régler, au moyen des bras actionnés par un moteur, la position du véhicule (200) en fonction de la différence entre les positions des trous caractéristiques sur les images et les positions théoriques ;
étape E : déterminer la position du véhicule (200), et terminer si la position prédéterminée requise est atteinte, sinon revenir à l'étape C.

10. Station de remplacement de batterie, **caractérisée en ce qu'**elle comprend un système de réglage de position de véhicule (100) selon l'une quelconque des revendications précédentes 1 à 8.
